Europäisches Patentamt

European Patent Office

Office européen des brevets

(11) Publication number: **0 462 488 A2**

# EUROPEAN PATENT APPLICATION

(21) Application number: 91109505.7

(22) Date of filing: 10.06.91

(51) Int. Cl.⁵: **H04M 1/56**, H04M 1/57, H04M 1/274

(30) Priority: **11.06.90 US 535808**

(43) Date of publication of application:
**27.12.91 Bulletin 91/52**

(84) Designated Contracting States:
**AT CH DE ES FR GB IT LI**

(71) Applicant: **ROLM SYSTEMS**
**4900 Old Ironside Drive, P.O.Box 58075**
**Santa Clara, CA 95052(US)**

(72) Inventor: **Rust, Tracy**
**1005A Markham**
**Austin, Texas 78753(US)**
Inventor: **Arledge, Cathy**
**5309 Western Hills Drive**
**Austin, Texas 78754(US)**
Inventor: **Ford, Gordon**
**1004 Lime Rock Drive**
**Round Rock, Texas 78681(US)**

(74) Representative: **Fuchs, Franz-Josef, Dr.-Ing. et al**
**Postfach 22 13 17**
**W-8000 München 22(DE)**

(54) Apparatus for capturing and storing call activity at a telephone set.

(57) Apparatus for capturing and storing information relating to telephone set activity to provide a call status activity log for the telephone set and for displaying and for dialing automatically telephone numbers stored in the call activity log. The apparatus includes: interaction means for interacting with the telephone set for generating signals in response to call activity at the telephone set; processor means for providing call activity status information in response to the signals; memory means for storing the information in a call activity log in accordance with predetermined selection criteria; and display means for providing a display of the records in the call activity log.

The invention relates to an apparatus for capturing and storing call activity at a telephone set. Especially the present invention pertains to apparatus for capturing and storing information relating to telephone set activity to provide a call status activity log for the telephone set and for displaying and for dialing automatically telephone numbers stored in the call activity log.

At present, call activity information relating to a telephone set is provided by: (a) using secretarial support and/or voicemail systems to provide incoming call activity information and (b) using call detail reports (CDR) such as those provided by various private branch switching systems and/or itemized telephone bills to provide outgoing call activity information.

These present methods and systems for providing call activity information relating to a telephone set suffer from several disadvantages. For example, both secretarial support and ROLM Systems PhoneMail have a disadvantage in that they only capture information relating to incoming calls, they are relatively expensive, and they provide a caller with an option of not leaving a message. In fact, a segment of the population refuses to talk to a recording device. In addition, itemized telephone bills have a disadvantage in that they provide delayed and incomplete information to the users, for example, local call details and unsuccessful call attempts are not reported and telephone bills do not provide information on incoming calls. Further in addition, CDR reports have a disadvantage in that they provide delayed and incomplete information to the user, for example, within a private network, internal telephone calls are not reported and unsuccessful call attempts are generally not available.

In light of the above, there is a need in the art for apparatus for automatically capturing and storing information relating to telephone set activity to provide an individual call status activity log for a telephone set and for displaying and for providing a capability for dialing automatically telephone numbers stored in the call activity log.

Embodiments of the present invention are apparatus for capturing and storing call activity at a telephone set which comprise: (a) interaction means for interacting with the telephone set for generating signals in response to call activity at the telephone set; (b) processor means for providing call activity status information in response to the signals; and (c) memory means for storing the information in a call activity log in accordance with predetermined selection criteria. Further embodiments further comprise display means for providing a display of the records in the call activity log and in still further embodiments the interaction means further comprises means for causing the telephone set to dial telephone numbers stored in the call activity log.

Embodiments of the present invention advantageously satisfy the above-identified need in the art and provide apparatus for capturing and storing information relating to telephone set activity to provide a call status activity log for the telephone set and for displaying and for dialing automatically telephone numbers stored in the call activity log. Embodiments of the present invention advantageously automatically provide substantially complete knowledge of call activity at a telephone set in real time, such information relating to both incoming and outgoing activity. In addition, in a preferred embodiment of the present invention, the call activity log can be displayed and telephone numbers which are stored therein can be dialed automatically. As one can readily appreciate, the call activity log which is provided by embodiments of the present invention can be used advantageously to measure and monitor telephone set activity and productivity of use thereof.

As those of ordinary skill in the art can appreciate, further embodiments of the present invention may incorporate selection criteria for capturing and/or displaying information so as to preserve certain confidential information. Such selection criteria can be developed in a manner which is well known to those of ordinary skill in the art in an interactive dialogue with users using keyboard 140 and display 120. As another example, the call activity log in the database system may be accessed by a further processor for analysis and formatting for the purpose of providing reports, bills, analyses of productivity, and so forth.

A complete understanding of the present invention may be gained by considering the following detailed description in conjunction with the accompanying drawing, in which:

FIG. 1 is an block diagram of an embodiment of the present invention;

FIG. 2 comprises a flowchart of software which is used to fabricate a preferred embodiment of the present invention for capturing incoming call information to provide a portion of a call activity log;

FIGs. 3A and 3B comprise a flowchart of software which is used to fabricate a preferred embodiment of the present invention for capturing outgoing call information to provide a portion of the call activity log; and

FIGs. 4A and 4B comprise a flowchart of software which is used to fabricate a preferred embodiment of the present invention for utilizing the call activity log.

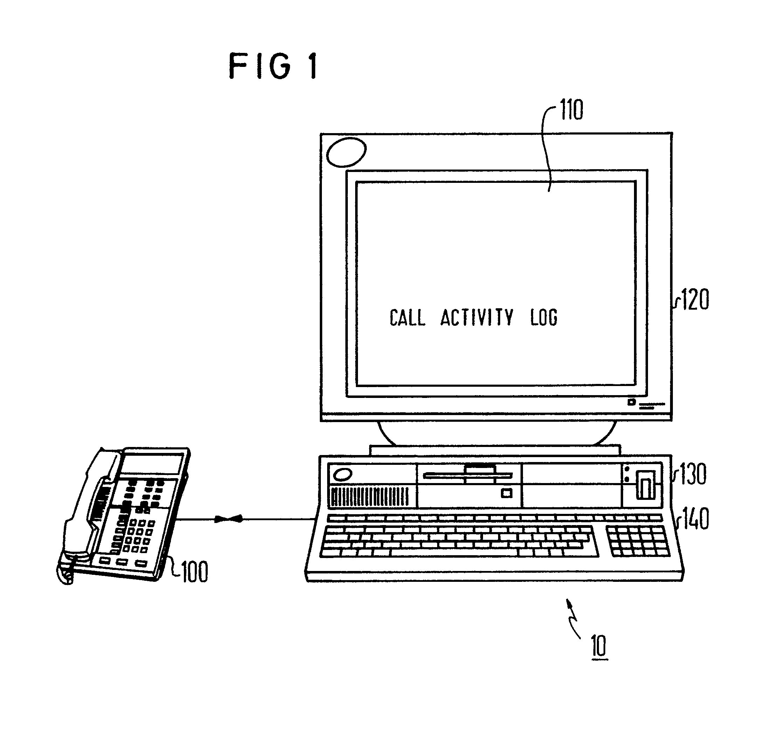

FIG. 1 is a block diagram of embodiment 10 of the present invention. As shown in FIG. 1, telephone 100 is connected to processor 130 and processor 130 is connected, in turn, to CRT display 120 and to keyboard 140. A database system (not shown) is accessed by processor 130 in a manner which is described in further detail below. Telephone 100 is fabricated in accordance with methods well known to those of ordinary skill in the art and may be a telephone which is commercially available such as, for example, a ROLMPhone 244/PC which is manufactured by ROLM Systems of Austin, Texas.

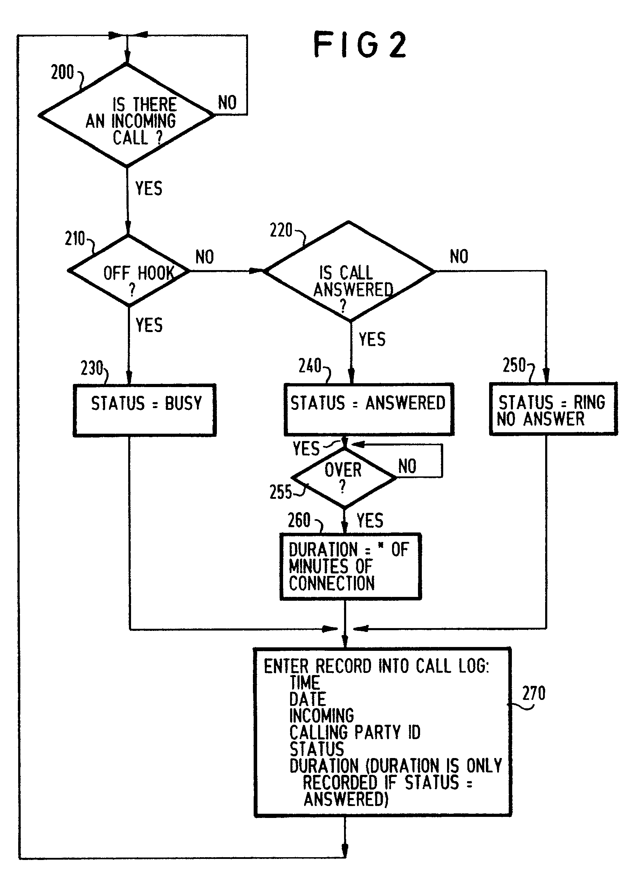

In a preferred embodiment of the present invention, processor 130 is an IBM PS/2 Model 50 personal computer which is available from International Business Machines Corp. but processor 130 may be any type of processor which can carry out the steps indicated in the flowcharts of FIGs. 2, FIGs. 3A-3B, and FIGs. 4A and 4B such as, for example, a microprocessor that may be configured to reside within the physical confines of telephone 100. In the embodiment shown in FIG. 1, display 120 is comprised of a CRT display which is well known to those of ordinary skill in the art for interfacing with processor 130, however, embodiments of the present invention are not limited to such CRT displays. Specifically, in alternative embodiments of the present invention, display 120 may comprise an LCD display such as one which is fabricated as an integral part of telephone 100. Lastly, keyboard 140 is a keyboard which is well known to those of ordinary skill in the art for interfacing with processor 130, however, embodiments of the present invention are not limited to such keyboards. Specifically, in alternative embodiments of the present invention, keyboard 140 may even be keypads of telephone 100, for example, a combination of numerical and function keypads, whose function may be determined by software in accordance with methods which are well known to those of ordinary skill in the art such as, for example, as the Cypress integrated voice-data terminal which is available from ROLM Systems of Austin, Texas.

In accordance with the present invention, telephone 100, embodied as ROLMPhone 244PC, detects incoming and outgoing stimuli to the telephone such as, for example, keypad presses --both numeric and function keypads, hookswitch status, line status, ring indicator status, ANI status, and so forth. In response to these stimuli, telephone 100 transmits stimuli identification signals to processor 130. In response, processor 130 interprets the stimuli identification signals stimuli and creates a call activity log on the database system (not shown). The database system: (a) may be stored in memory associated with processor 130; (b) may be stored on a peripheral storage apparatus such as, for example, a magnetic disk system which is associated with processor 130; or (c) may be stored on a remote database system which is accessed by processor 130 over a communications link. Lastly, it should be clear to those of ordinary skill in the art that the present invention is not limited to the use of a database system which is created and maintained by processor 130 and, in other embodiments of the present invention, the database system may reside on storage modules which themselves are disposed within the physical confines of telephone 100 itself or the database system may reside on a private branch exchange which is accessed by processor 130 over a communications link. Lastly, information is added to, deleted from, and retrieved from the database system in a manner which is well known to those of ordinary skill in the art.

Before describing the operation of embodiment 10 of the present invention shown in FIG. 1 in detail with reference to FIGS. 2, 3A-3B, and 4A-4B we will describe how embodiment 10 operates in general.

For incoming message activity, assume that telephone set 100 receives a call from a calling party. In response, a signal is sent to processor 130 to note the incoming call. Then, processor 130 monitors the call to determine, for example, whether telephone set 100 is already in use. If the call is answered, processor 130 notes the duration of the call and updates a call activity log with available information relating to the call such as, for example, the calling party identification, the time and date of the call, the duration of the call, if answered, and the status of the call such as, for example, answered, ring no answer, or busy.

For outgoing message activity, assume that a caller dials a telephone number using the numeric keypads on telephone set 100. As the numeric keypads are pressed, a signal is transmitted to processor 130 which is used to determine the telephone number that is being dialed. Then, processor 130 monitors the call to determine, for example, whether the called party answered. If the call is answered, processor 130 notes the duration of the call and updates the call activity log with available information relating to the call such as, for example, the called party identification, the time and date of the call, the duration of the call, if answered, and the status of the call such as, for example, answered, ring no answer, or busy.

For display or redial, assume that a caller presses a key on keyboard 140 to indicate that he or she wants to examine the call activity log. Then, the call activity log is displayed. The user can scroll through the log, delete records, sort the log on the basis of selected fields, and request the apparatus to dial a telephone number in the log.

We now turn to describe the manner in which embodiment 10 operates in detail with reference to the flowcharts shown in FIGs. 2, 3A-3B, and 4A-4B.

specifically, we will describe the manner in which a preferred embodiment of the present invention captures incoming call information to provide a portion of a call activity log with reference to FIG. 2. As shown in FIG. 2, at decision box 200, the program in processor 130 is awaiting the receipt of a stimulus identification signal that indicates the detection of an incoming telephone call to telephone 100. If there is an incoming call, control is transferred to decision box 210, otherwise, control remains at decision box 200 to wait for an incoming telephone call.

At decision box 210, the program determines whether telephone 100 is already in use by determining whether telephone 100 is off hook. If telephone 100 is off hook, i.e., already in use, control is transferred to box 230, otherwise, control is transferred to decision box 220.

At decision box 220, the program determines whether the incoming call is answered by determining whether the telephone goes from an on hook to an off hook condition within a predetermined time period. If the incoming call is answered, control is transferred to box 240, otherwise, control is transferred to box 250.

At box 230, the program sets the variable status equal to "busy," then control is transferred to box 270.

At box 240, the program sets the variable status equal to "answered," then control is transferred to decision box 255.

At box 250, the program sets the variable status equal to "ring-no-answer," then control is transferred to box 270.

At decision box 255, the program determines whether the telephone call has ended by determining whether an on-hook signal was received. If it is, control is transferred to box 260, otherwise, control is transferred to decision box 255.

At box 260, the program determines the duration of the telephone call by obtaining the value of a clock (not shown) which is associated with processor 130. Then, control is transferred to box 270.

At box 270, the program adds a record to the call activity log in the data base and control is then transferred to box 200 to initialise the sequence again. A record in the call activity log includes information such as, without limitation, the time the call was initiated, date (obtained from a calendar (not shown) associated with processor 130, incoming telephone number (if available), calling party identification (if available), status, and duration of the call. The calling party identification may appear as a feature in certain environments wherein such information is transmitted from the switch to the telephone set. In other environments, the database system may include a directory of calling party identification for incoming telephone number or other such information which is transmitted to the telephone set. In such latter environments, a preferred embodiment of the present invention would include a query of the database system to retrieve the calling party identification for inclusion in the call activity log.

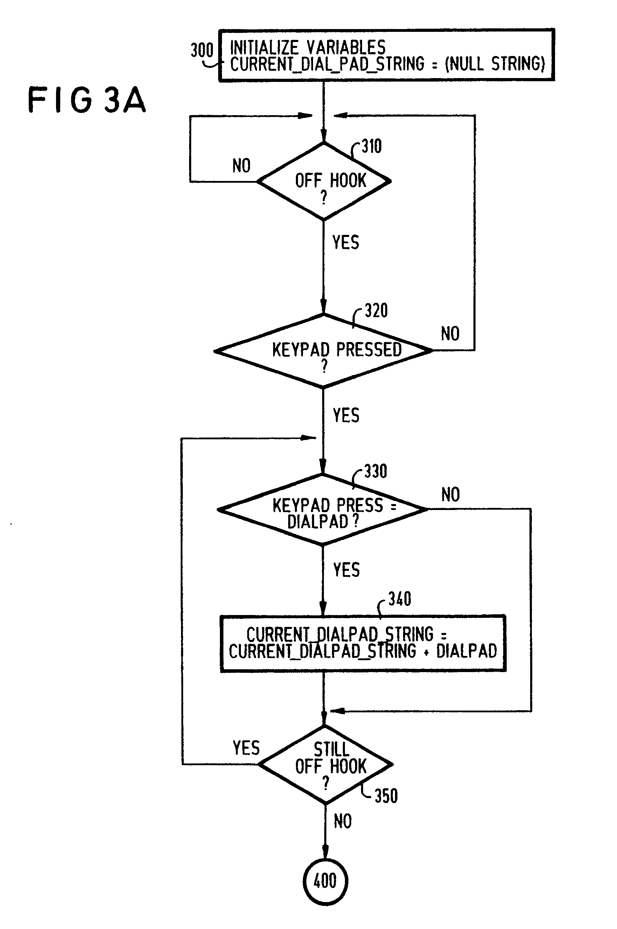

We will now describe the manner in which a preferred embodiment of the present invention captures outgoing call information to provide a portion of a call activity log with reference to FIGs. 3A-3B. As shown FIG. 3A, at box 300, the program in processor 130 initializes a variable referred to as the current Dial_Pad_String by setting it equal to a null string to indicate that the system is ready for the first character in a telephone number to be entered. Then control is transferred to decision box 310.

At decision box 310, the program determines whether the telephone is off hook by checking a variable which is set automatically. The variable is set automatically in response to a signal which is generated by telephone 100 and transferred to processor 130. If the telephone is not off hook, then control remains at decision box 310 for a periodic check, otherwise, control is transferred to decision box 320.

At decision box 320, the program determines whether a keypad has been pressed. If a keypad has not been pressed, the program just loops back to decision box 310. However, if a keypad was pressed, control is transferred to decision box 330.

At decision box 330, the program determines whether the pressed keypad was a dial keypad. If it was, then control is transferred to box 340 to update the current Dial_Pad_String, otherwise, control is transferred to decision box 350.

At box 340, the program updates the current Dial_Pad_String by adding the most recently pressed dial keypad to the string. Then control is transferred to decision box 350.

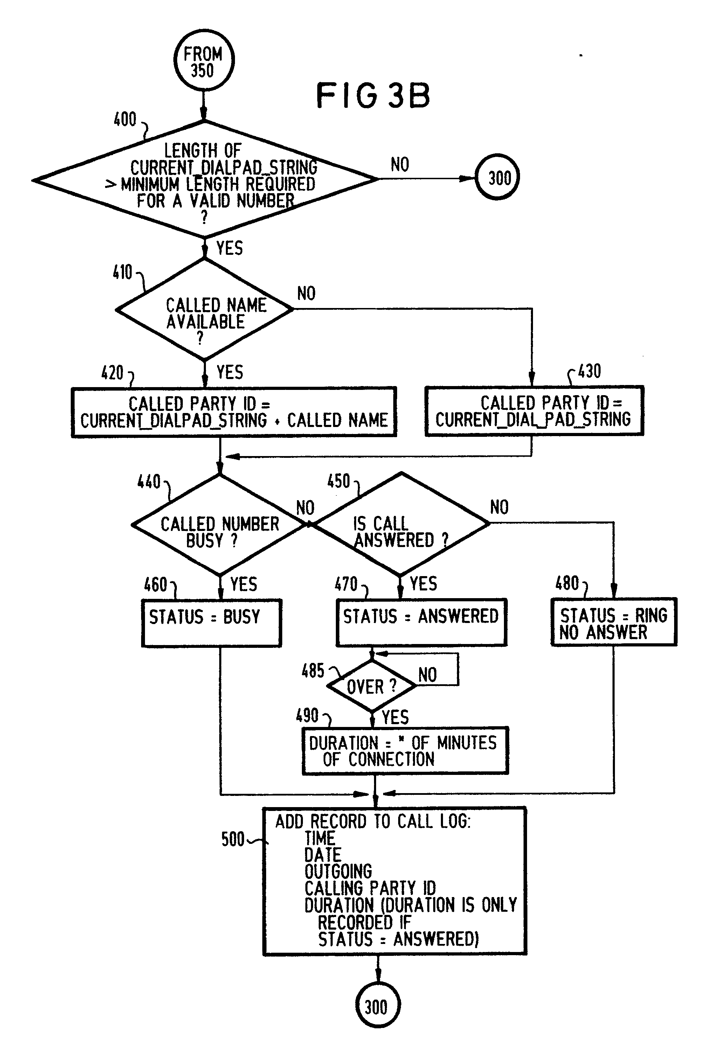

At decision box 350, the program determines whether the telephone is still off hook. If it is, control is transferred to decision box 330 to await the next keypad, otherwise, control is transferred to decision box 400 of FIG. 3B.

At decision box 400, the program determines whether the length of the current Dial_Pad_String is greater than the minimum length for a valid telephone number. If so, then control is transferred to box 410, otherwise, control is transferred to box 300 to initialize the sequence again.

At box 410, the program interrogates the database system by retrieving the called party identification for the telephone number dialed. The program determines whether the called party identification is contained within the database. If so, then control is transferred to box 420, otherwise, control is transferred to box 430.

At box 420, the program sets the variable called party id equal to the current Dial_Pad_String plus the called party identification. Then, control is transferred to decision box 440.

At box 430, the program sets the variable called party id equal to the current Dial_Pad_String. Then, control is transferred to decision box 440.

At decision box 440, the program waits for a signal referring to the telephone call completion status. Then the program determines whether the called telephone number was busy. If it is, control is transferred to box 460, otherwise, control is transferred to decision box 450.

At decision box 450, the program determines whether the telephone call was answered. If it was, control is transferred to box 470, otherwise, control is transferred to box 480.

At box 460, the program sets the variable status equal to "busy," then control is transferred to box 500.

At box 470, the program sets the variable status equal to "answered," then control is transferred to decision box 485.

At box 480, the program sets the variable status equal to "ring-no-answer," then control is transferred to box 500.

At decision box 485, the program determines whether the telephone call has ended by determining whether an on-hook signal was received. If it is, control is transferred to box 490, otherwise, control is transferred to decision box 485.

At box 490, the program determines the duration of the telephone call by obtaining the value of a clock (not shown) which is associated with processor 130. Then, control is transferred to box 500.

At box 500, the program adds a record to the call activity log in the data base and control is then transferred to box 300 to initialize the sequence again. A record in the call activity log includes information such as, without limitation, the time the call was initiated, date (obtained from a calendar (not shown) associated with processor 130, outgoing telephone number, calling party identification (if available), status, and duration of the call.

Note, in the above-described embodiment of the capture of outgoing information, there could, in an alternative embodiment, also be a check on the maximum length of the current dial_pad_string and the program could truncate telephone numbers to that length.

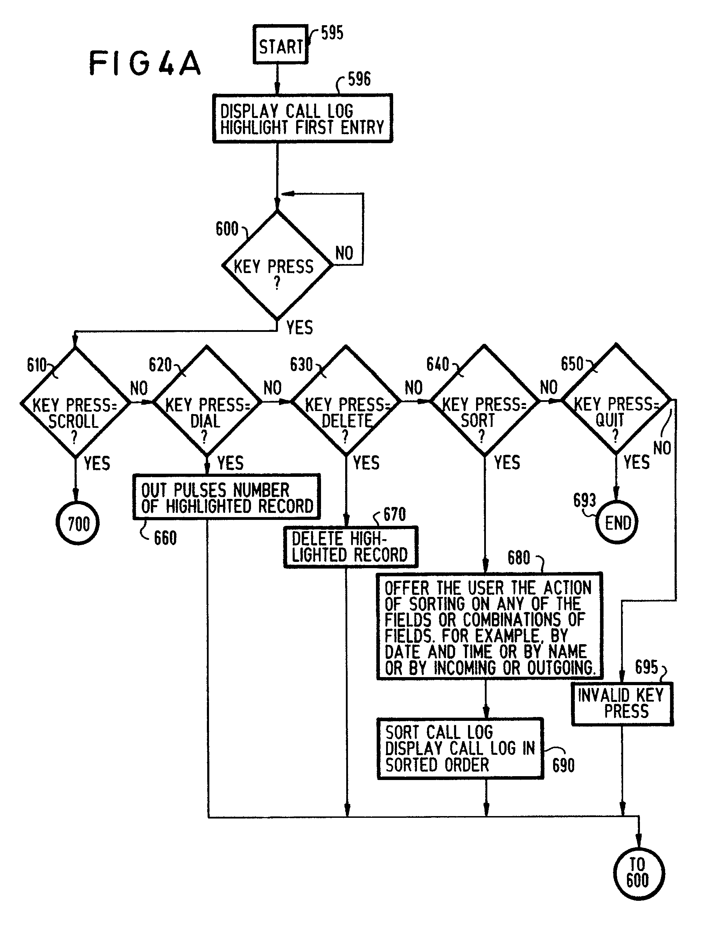

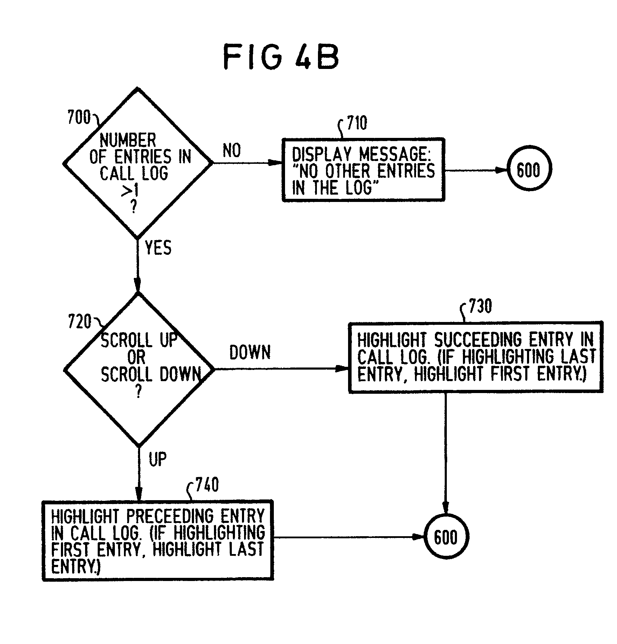

We will now describe the manner in which a preferred embodiment of the present invention utilizes the call activity log with reference to FIGs. 4A-4B. As shown FIG. 4A, at box 595, the program in processor 130 has received a message from keyboard 140 indicating that the user wishes to display and/or use the call activity log to redial telephone numbers. Then control is transferred to box 596. As is well known to those of ordinary skill in the art, the particular sequence of keypads presses which are used to invoke such a function may be a single keypad press or the sequence may include an interactive dialogue between the apparatus and the user which includes the use of a password to preserve the confidentiality of certain information. Further, although the description below describes invoking a function by pressing a single keypad, it should be clear to those of ordinary skill in the art that this is merely done for ease of understanding since such a function may also be invoked by pressing a predetermined multiplicity of keypads which are set aside for invoking the function or which are so determined under software control.

At box 596, the program retrieves the call activity log for the telephone set from the database, displays the portion that can fit on display 120, and highlights the first entry. Then, control is transferred to decision box 600.

At decision box 600, the program awaits for further instructions from the user. If there is a keypad press, control is transferred to decision box 610, otherwise, control is transferred to decision box 600.

At decision box 610, the program determines whether the keypad pressed corresponds to a request for a SCROLL function. If it was, then control is transferred to box 700, otherwise, control is transferred to decision box 620.

At decision box 620, the program determines whether the keypad pressed corresponds to a request for a DIAL function. If it was, control is transferred to box 660, otherwise, control is transferred to decision box 630.

At decision box 630, the program determines whether the keypad pressed corresponds to a request for a DELETE RECORD function. If it was, control is transferred to box 670, otherwise, control is transferred to decision box 640.

At decision box 640, the program determines whether the keypad pressed corresponds to a request for a SORT RECORDS function. If it was, control is transferred to box 680, otherwise, control is transferred to decision box 650.

At decision box 650, the program determines whether the keypad pressed corresponds to a request to QUIT the display and/or redial function. If it was, control is transferred to box 693, otherwise, control is transferred to box 695.

At box 695, processor 130 sends a message to display 120 to display the following message: "INVALID KEY PRESS." Then, control is transferred to decision box 600 to await the next keypad press.

At box 660, processor 130 transmits the telephone number in the highlighted record in the display of the call activity log to telephone 100 along with a signal to cause telephone 100 to dial the telephone number. Then, control is transferred to decision box 600.

At box 670, the program deletes the highlighted record from the call activity log in the database system and from the display thereof on display 120. Then, control is transferred to decision box 600.

At box 680, the program engages in a dialogue with the user, in a manner which is well known to those of ordinary skill in the art to obtain fields and/or combinations of fields for sorting of the data in the call activity log. Then, control is transferred to box 690.

At box 690, the program sorts the call activity log, using the fields identified in box 680, in accordance with methods well known to those of ordinary skill in the art. Then, the sorted call activity log is stored in the data base system and displayed on display 120 with the first entry highlighted. Lastly, control is transferred to decision box 600.

At decision box 700, the program determines whether there are more than one entry in the call activity log. It there are, control is transferred to decision box 720, otherwise, control is transferred to box 710.

At box 710, the program sends the following message for display to display 120: "NO OTHER ENTRIES IN THE LOG." Then, control is transferred to box 600.

At decision box 720, the program determines whether the keypad pressed corresponds to a SCROLL-UP or a SCROLL-DOWN function. If it was a SCROLL-UP function keypad, control is transferred to box 740, otherwise, control is transferred to box 730.

At box 730, processor 130 highlights the succeeding entry in the call activity log. If the presently highlighted entry is the last, then the log is "wrapped around" by next highlighting the first entry. Then, control is transferred to decision box 600.

At box 740, processor 130 highlights the preceding entry in the call activity log. If the presently highlighted entry is the first, then the log is "wrapped around" by next highlighting the last entry. Then, control is transferred to decision box 600.

Further, those skilled in the art recognize that further embodiments of the present invention may be made without departing from its teachings. For example, embodiments of the present invention may incorporate selection criteria for capturing and/or displaying information so as to preserve certain confidential information. Such selection criteria can be developed in a manner which is well known to those of ordinary skill in the art in an interactive dialogue with users using keyboard 140 and display 120. As another example, the call activity log in the database system may be accessed by a further processor for analysis and formatting for the purpose of providing reports, bills, analyses of productivity, and so forth. As still another example, the display of the call activity log may include a page up and/or a page down function key to complement the scrolling function described above.

## Claims

1. Apparatus for capturing and storing call activity at a telephone set (100), characterized in that interactions means are interacting with the telephone set (100) for generating signals in response to call activity at the telephone set (100), in that processor means (130) are identifying and providing call activity information in presponse to the signals, and in that memory means are storing the the information provided by the processor means (130) in a call activity log in accordance with predetermined selection criteria.

2. Apparatus according to claim 1, characterized in that display means (120) are providing a display of information in the call activity log (110).

3. Apparatus according to claim 1, characterized in that the processor means (130) determines identification information pertaining to the call activity information.

4. Apparatus according to claim 3, characterized in that the processor means (130) obtains the identification information by accessing a database system.

5. Apparatus according to claim 2, characterized in that the interaction means further comprises means for causing the telephone set (100) to dial telephone numbers stored in the call activity log (110).

6. Apparatus according to claim 2, characterized in that the display means further comprises means for sorting the information in the call activity log (110).

7. Apparatus according to claim 2, characterized in that the display means (120) further comprises means for scrolling through the call activity log (110).

8. Apparatus according to claim 2, characterized in that the display means (120) further comprises means for providing the display for users satisfying predetermined identifications.

.

# FIG 1

CALL ACTIVITY LOG

# FIG 2

200 — IS THERE AN INCOMING CALL ? — NO

YES

210 — OFF HOOK ? — NO

220 — IS CALL ANSWERED ? — NO

YES (210)

YES (220)

230 — STATUS = BUSY

240 — STATUS = ANSWERED

250 — STATUS = RING NO ANSWER

YES — OVER ? — NO

255

260 — YES

260 — DURATION = * OF MINUTES OF CONNECTION

270 — ENTER RECORD INTO CALL LOG:
TIME
DATE
INCOMING
CALLING PARTY ID
STATUS
DURATION (DURATION IS ONLY RECORDED IF STATUS = ANSWERED)

# FIG 3A

EP 0 462 488 A2

# FIG 3B

**FROM 350**

**400** LENGTH OF CURRENT_DIALPAD_STRING > MINIMUM LENGTH REQUIRED FOR A VALID NUMBER ? — **NO** → **300**

**YES**

**410** CALLED NAME AVAILABLE ? — **NO** →

**YES**

**420** CALLED PARTY ID = CURRENT_DIALPAD_STRING + CALLED NAME

**430** CALLED PARTY ID = CURRENT_DIAL_PAD_STRING

**440** CALLED NUMBER BUSY ? — **NO** → **450** IS CALL ANSWERED ? — **NO** →

**YES** (440) → **460** STATUS = BUSY

**YES** (450) → **470** STATUS = ANSWERED

**480** STATUS = RING NO ANSWER

**485** OVER ? — **NO** →

**YES** → **490** DURATION = " OF MINUTES OF CONNECTION

**500** ADD RECORD TO CALL LOG:
TIME
DATE
OUTGOING
CALLING PARTY ID
DURATION (DURATION IS ONLY RECORDED IF
STATUS = ANSWERED)

**300**

FIG 4A

START ⌐595

⌐596
DISPLAY CALL LOG
HIGHLIGHT FIRST ENTRY

600 ⌐
KEY PRESS ? — NO

YES

610⌐ KEY PRESS= SCROLL ? — NO → 620⌐ KEY PRESS= DIAL ? — NO → 630⌐ KEY PRESS= DELETE ? — NO → 640⌐ KEY PRESS= SORT ? — NO → 650⌐ KEY PRESS= QUIT ?

YES

OUT PULSES NUMBER
OF HIGHLIGHTED RECORD
⌐660

700

⌐670
DELETE HIGH-
LIGHTED RECORD

680 ⌐
OFFER THE USER THE ACTION
OF SORTING ON ANY OF THE
FIELDS OR COMBINATIONS OF
FIELDS. FOR EXAMPLE, BY
DATE AND TIME OR BY NAME
OR BY INCOMING OR OUTGOING.

693
END

YES — NO

695⌐
INVALID KEY
PRESS

SORT CALL LOG
DISPLAY CALL LOG IN
SORTED ORDER ⌐690

TO
600

# FIG 4B

700 — NUMBER OF ENTRIES IN CALL LOG >1 ?

NO → 710 — DISPLAY MESSAGE: "NO OTHER ENTRIES IN THE LOG" → ( 600 )

YES ↓

720 — SCROLL UP OR SCROLL DOWN ?

DOWN → 730 — HIGHLIGHT SUCCEEDING ENTRY IN CALL LOG. (IF HIGHLIGHTING LAST ENTRY, HIGHLIGHT FIRST ENTRY.)

UP ↓

740 — HIGHLIGHT PRECEEDING ENTRY IN CALL LOG. (IF HIGHLIGHTING FIRST ENTRY, HIGHLIGHT LAST ENTRY.) → ( 600 )